# EUROPEAN PATENT APPLICATION

(11) **EP 4 546 164 A1**
(43) Date of publication of application: **30.04.2025**
(21) Application number: 23827557.2
(22) Date of filing: 23.06.2023
(51) Int. Cl.: G06F 16/909, G06F 16/29, G06F 16/955, H04L 67/52

(54) **DEVICE AND METHOD FOR GENERATING META SPACE-TIME ACCESS GATE INCLUDING LOCATION INFORMATION VALUE REQUIRED BY USER, AND META SPACE-TIME ACCESS GATE CONNECTION DEVICE**

(30) Priority: 24.06.2022 KR 20220077226
(71) Applicant: FRONTX Co., Ltd., Seoul 06130 (KR)
(72) Inventor: NOH, Chan Min, Daejeon 34190 (KR)
(74) Representative: Papula Oy
(86) International application number: PCT/KR2023/008722
(87) International publication number: WO 2023/249448

(57) **Abstract**

The present invention relates to a meta space-time access gate connection device and a meta space-time access gate generation device and method, in which, for a content to be shared on a network, regardless of an actual location of a terminal when the content is uploaded, a location information value required by a user is included so that the content is provided to enable exposure of the content at a specific location. The meta space-time access gate generation device comprises: a network a connection information reception unit for receiving, from a user, network connection information which enables access to a random content to be shared; an address input unit for receiving a zip code or address of a location for sharing of a content to be shared; and a meta space-time access gate generation unit for acquiring latitude information and longitude information of a location corresponding to a zip code or address received via the address input unit, and generating meta space-time access gate information for a content to be shared, by including the acquired latitude information and longitude information along with network connection information.

## Description

### [Technical Field]

The present invention relates to a meta spacetime access gate connection device and a meta spacetime access gate generation device and method, in which, for content to be shared on a network, regardless of an actual location of a terminal when the content is uploaded, a location information value required by a user is included so that the content is provided to enable disclosure of the content at a specific location without collecting location information of the user terminal.

### [Background Art]

The World Wide Web (WWW), also known as Web 1.0, was developed between 1989 and 1991 by Tim Berners-Lee of the European Organization for Nuclear Research and became synonymous with the Internet. It began with the development and distribution of web browsers and grew with the development and competition of web browsers.

However, in the early days of Web 1.0, users passively received information such as in newspapers or broadcasts, but with the rise of social network services (SNS) such as blogs, Twitter, Facebook, and Instagram, a new era emerged where users could freely generate and share posts online based on their interests.

In this way, the Web 2.0 era was characterized by participation, sharing, and openness, and emphasized social connectivity in which netizens actively participated to generate and share information, but recently, we have entered the Web 3.0 era, which is an Internet environment that is evolving even further.

Web 3.0 is evolving into a personalized and intelligent web, developed and utilized in a direction where users judge and infer everything. When providing data to users, Web 3.0 means that the service is centered on the actual meaning of the data for efficient use of the data rather than the data itself.

This means that rather than simply passively accepting information quantified or framed by others, the voluntary decision-making of individuals becomes the center of network operation. For example, in the Internet advertising industry, the existing method was to unilaterally display an advertiser's advertisement to a user's terminal in a location desired by an advertiser who wanted to display the Internet advertisement. On the other hand, the method according to Web 3.0 is the opposite concept, allowing the user to directly decide the decision-making authority for the distribution of advertising information to multiple terminals.

As part of this, Apple in the United States recently implemented an opt-in mechanism under its app tracking transparency (ATT) framework in iOS.

Previously, the location of a client terminal was usually identified by a browser or app to track personal information, and the advertiser's advertisement was unilaterally sent to the client terminal that met the conditions desired by the advertiser (e.g. location, target age, etc.). For example, there are cases where an advertisement for a product or brand that a user has searched for once on a website appears on a terminal, or information on a product from a clothing store that the user briefly visited is suddenly received as a text message. These are services provided by a business operator that operates the website or app by automatically obtaining personal information such as the location information of the user's terminal.

However, the ATT-based service method is basically intended to protect the user's personal information, and a function of transmitting information (advertisements, etc.) on the user is activated only when the user explicitly grants access to the website or app. Therefore, the website or app first asks the user, "Do you allow the app or website to track your activities?" and provides services only to users who agree to this. However, currently, the opt-in rate of users through this function is very low.

Meanwhile, in a case in which users generate content to disclose the content on a network, the current network environment has a problem in that it cannot simultaneously store or effectively use information on the radius or height formed around the location, even when storing arbitrary location information regardless of the actual location of the terminal storing the content.

When the radius or height is not used together with the location information, there is a problem that no two-dimensional (2D) or three-dimensional (3D) space can be specified. This problem is a problem that must be solved when the user wants to disclose the content not only at a single location, but at specific locations within a space specified by a distance to the radius formed from the corresponding location, or at specific locations within a space specified by an arbitrary height from the location of the corresponding space.

More specifically, in the case of content that includes information on a radius together with location information, a 2D space corresponding to the distance to the radius with respect to the location corresponding to the location information can be specified. When the content includes information on the radius and height together with the location information, it is possible to specify the 3D space up to the height, with respect to the 2D space corresponding to the distance to the radius from the location corresponding to the location information. However, when the content does not use the radius or height, it has the problem of not being able to specify the space at all.

Another problem is that when disclosing content at specific locations in a specific space in which the user wants to disclose it, it is even more difficult to disclose the same content only at a very specific period or time point, such as a certain time point in the past, a certain period in the past, the present, a certain time point in the future, or a certain period in the future.

As still another problem, in a case in which users store content to be disclosed on a network as well as location information, when the location information is stored in the form of an address in natural language for different languages, the server must identify each natural language individually using artificial intelligence, and then additionally derive significantly specific latitude and longitude information. Therefore, when information such as websites, apps, Internet advertisements, or direct messages that contain many of these routines are provided, there is a problem that it causes a loss of overall network resources and a decrease in speed due to natural language interpretation. In order to solve this problem, it is required to be able to specify the exact specifications for specific location information, while also including rules that are common and unchanging worldwide for specific location information. Since more specific location information in natural language consumes more network resources, to supplement these limitations, a technology for integrating and storing specific location information as latitude and longitude information is required.

On the other hand, the reason why a technology that limits capacity (e.g. number of bytes) is needed is because, when a server processes a large amount of natural language location information, the amount of network resources consumed by AI for natural language interpretation for each language is much smaller than the amount of network resources consumed for directly identifying latitude and longitude information.

Meanwhile, in terms of the industrial aspect of information distribution, for example, the probability of a consumer's purchase according to a method of the existing Internet advertising industry, out of two users who want to purchase a Korean product online, one may search for the product in the United States, and the other may search for the product in Korea. From the seller's perspective, the seller spends money on advertising and display advertisements, but even in the case of a Korean product, it is impossible to accurately predict which country's user will purchase the product, and as a result, the seller has no choice but to execute advertisements based on the probability and spend the corresponding costs.

In this way, since there was no choice but to provide limited information distribution methods and corresponding information to buyers, advertising costs were spent based on the corresponding probability as a result, but there was a problem of having to accept the loss of costs.

### [Related Art Documents]

### [Patent Document]

(Patent Document 1) Korean Patent Publication No. 10-0898757 (May 14, 2009) [Disclosure]

### [Technical Problem]

The purpose of the present invention is for solving the above problems and directed to providing a meta spacetime access gate generation device and method and a meta spacetime access gate connection device, in which, by adding a location information value requested by a user to meta spacetime information of a post to be shared, i.e., content to be shared, the content can be disclosed at locations desired by the user without collecting location information of a user terminal.

In addition, another purpose of the present invention is directed to providing a meta spacetime access gate generation device and method and a meta spacetime access gate connection device, in which users can leave their desired location information on the Internet and access or search for corresponding content by freely adding location information to a post (content) and disclosing the location information without any limitation on the number of pieces of location information even if the post (content) does not have location information.

In addition, still another purpose of the present invention is directed to providing a meta spacetime access gate generation device and method and a meta spacetime access gate connection device, in which content can be disclosed in specific locations and specific spaces in more detailed specific locations by including a specific location desired by a user, location information within a space specified by a distance to a radius formed from the corresponding location, and location information within a space specified from the location of the corresponding space to a predetermined height, as location information values. This aims to resolve concerns that location information may be spam information for some users.

In addition, yet purpose of the present invention is directed to providing a meta spacetime access gate generation device and method and a meta spacetime access gate connection device, in which corresponding content can be disclosed at a specific location desired by users and at a time point desired by the users by including time information related to a time point or period for disclosing the content to be shared.

### [Technical Solution]

One aspect of the present invention provides a device for generating a meta spacetime access gate including a location information value required by a user, which includes a network connection information reception unit configured to receive, from a user, network connection information which allows access to content to be shared which is posted on the Internet or uploaded to a specific website; an address input unit configured to receive an address or postal code of a location for sharing the content to be shared; and a meta spacetime access gate generation unit configured to acquire latitude information and longitude information of a location corresponding to the address or postal code received through the address input unit, and generate meta spacetime access gate information for the content to be shared that includes the acquired latitude information and longitude information along with the network connection information.

Further, the meta spacetime access gate generation device according to an embodiment of the present invention may further include a latitude and longitude DB configured to store the latitude information and longitude information of the location corresponding to the address or postal code; and a meta spacetime information DB configured to store meta spacetime access gate information for each piece of content generated through the meta spacetime access gate generation unit, wherein the meta spacetime access gate generation unit may acquire the latitude information and longitude information of the location corresponding to the address or postal code received through the address input unit by querying data stored in the latitude and longitude DB, and match the meta spacetime access gate information with identification information which allows the user or the content to be identified and store the matched information when storing the meta spacetime access gate information in the meta spacetime information DB.

The address input unit of the meta spacetime access gate generation device according to one embodiment of the present invention may search for the location to be shared on an electronic map in conjunction with the electronic map and receive an address of the corresponding location.

In the meta spacetime access gate generation device according to one embodiment of the present invention, the network connection information may be an address of a webpage or server where the content to be shared is posted or uploaded, and the address of the webpage or server may be a URL address, an IP address, or a source code including one of the URL address and the IP address.

The meta spacetime access gate generation unit of the meta spacetime access gate generation device according to one embodiment of the present invention may generate meta spacetime access gate information for the content to be shared that further includes address information of a location matching the latitude information and longitude information.

In addition, the meta spacetime access gate generation unit of the meta spacetime access gate generation device according to one embodiment of the present invention may generate the meta spacetime access gate information for the content to be shared that further includes a postal code of the location matching the latitude information and longitude information.

In addition, the meta spacetime access gate generation unit of the meta spacetime access gate generation device according to one embodiment of the present invention may generate the meta spacetime access gate information for the content to be shared that further includes location information in a space area specified by a height configured from the location matching the latitude information and longitude information.

In this case, the space specified by the height may include one of the number of floors of an arbitrary building, a height from sea level, and a height from the ground, and may be specified by specifying a single floor number or height or by designating a range of floors (from a certain floor to another floor) or a range of heights (from a certain height to another height).

In addition, the meta spacetime access gate generation unit of the meta spacetime access gate generation device according to one embodiment of the present invention may generate meta spacetime access gate information on the content to be shared that further includes time information including a time point or period for disclosing the content to be shared at the location matching the latitude information and longitude information.

In addition, the meta spacetime access gate generation device according to one embodiment of the present invention may further include a distance radius configuration unit configured to provide an interface (UI) manipulation screen for configuring a spatial area defined by a distance from the location matching the latitude information and longitude information to a radius. In this case, the meta spacetime access gate generation unit may additionally include radius distance information configured by the distance radius configuration unit to generate the meta spacetime access gate information on the content to be shared.

In addition, the meta spacetime access gate generation unit may group latitude information and longitude information of a spatial location defined by the radius distance configured by the distance radius configuration unit with respect to the location corresponding to the latitude information and longitude information, assign a set ID to the grouped latitude information and longitude information, and generate the meta spacetime access gate information to include only the set ID.

In addition, the meta spacetime access gate generation unit may directly include latitude and longitude information at a location that is the center of the radius as representative information in the meta spacetime access gate information and assign a set ID to the latitude and longitude information at the spatial location defined by the radius distance to generate the meta spacetime access gate information.

Meanwhile, another aspect of the present invention provides a meta spacetime access gate connection device which includes a unit configured to receive search information including at least one of an address or a postal code as location information to be searched for, identify latitude information and longitude information of a location corresponding to the received search information, search for meta spacetime access gate information matching the identified latitude and longitude information, and provide access to network access information included in the retrieved meta spacetime access gate information through an Internet network.

Meanwhile, still another aspect of the present invention provides a meta spacetime access gate generation method performed in a device for generating a meta spacetime access gate including a location information value required by a user, which includes receiving, by the generation device, network connection information which allows access to content to be shared which is posted on the Internet or uploaded to a specific website, from a user; receiving, by the generation device, an address or postal code of a location for sharing the content to be shared; detecting, by the generation device, latitude information and longitude information of a location corresponding to the received address or postal code; and generating, by the generation device, meta spacetime access gate information on the content to be shared, that includes the detected latitude information and longitude information along with the network connection information.

### [Advantageous Effects]

According to the present invention, even without collecting the location information of the user terminal, there is an effect that the content desired by the user can be disclosed at a specific location desired by the user. In particular, the present invention has the effect of enabling disclosure of highly accurate location-based content by including and sharing, on the Internet, one or more of location information corresponding to a specific location desired by a user, location information of a space formed by an arbitrary radius from the specific location, or location information specified by a three-dimensional (3D) height from the location of the space.

In addition, according to the present invention, when there are a plurality of pieces of time information on content including location information corresponding to one location, there is also an effect that the same content can be disclosed at different periods or different time points corresponding to the plurality of pieces of time information. This provides an effect of allowing a large number of locations to coexist depending on the period or time point even in one location, and in such cases, content can be disclosed for the large number of locations that coexist.

Moreover, when users on the network configure a location they want to share on the map and the related device in relation to content they want to share, such as current events, thoughts about the past or future, or ideas, in relation to a specific space or regardless of the location of the space, there is an effect of being able to share thoughts, etc., of other users in the same space without collecting the users' location information.

In addition, according to the present invention, even in the case of a post on a site or app that cannot add location information, the user can freely add location information desired by the user and location information corresponding to a space specified by a distance from the desired location to an arbitrary radius, or height location information specified by a height configured from the location of the space, or disclosure location information of content according to a period or time point. Therefore, the user can upload a video in a square in Manhattan in New York and configure the disclosure location of the video to any location within a 200-meter radius from the same square in Manhattan for a one-year period starting 100 years from now, or configure the disclosure location of the video to any location within Korea and France for a 30-minute period starting 48 hours from now or to any location within Seoul, South Korea, and Paris, France, for a one-year period starting 10 years in the past.

In addition, according to the present invention, since a plurality of pieces of meta spacetime access information can be generated according to a location to be shared for one piece of content, it becomes easy for the user to selectively configure the location to be shared for each piece of content. In addition, there is a significant effect that it can be easily applied to cases in which the location to be shared is changed or added even after uploading content to a specific website or app.

In addition, according to the present invention, since the radius distance, height, and time can be configured with respect to a user's desired location, there is a user convenience that one can allow one's own video to be disclosed (searched for) in a wide area or not disclosed (searched for) as needed.

In addition, according to the present invention, it is possible to activate the location as needed and search for the location as needed.

In addition, under the existing network environment, since the website and app publisher selling the product directly participated in and controlled the distribution method of the related information or the configuration of the distribution route of the information, the boundaries and scope of sharing the distributed information were inevitably limited.

In contrast, according to the present invention, even when the content being searched for or disclosed has one piece of location information, locations within a space specified by a distance to the radius from the corresponding location, locations within a space specified by a certain height from the location of the corresponding space, and a large number of new locations depending on each different time point or period of disclosure of the content even for one location can be further specified to disclose the content, thereby breaking down the scope and boundaries of the previously limited information distribution methods and routes. In particular, it has an effect of providing users with a much higher probability of achieving industrial goals, which can lead to an expansion of the amount of information distributed, an expansion of fields, an expansion of opportunities, and a reduction in costs in relation to the expansion of sales of certain goods.

### [Description of Drawings]

FIG. 1 is a diagram illustrating a system configuration of a meta spacetime access gate generation device and a meta spacetime access gate connection device according to an embodiment of the present invention.
FIG. 2 is a detailed block diagram illustrating a meta spacetime access gate generation device according to an embodiment of the present invention.
FIGS. 3 and 4 are diagrams illustrating a function of designating height information and time information for a location where content to be shared is shared.
FIG. 5 is a flowchart illustrating an operation process of a meta spacetime access gate generation device according to an embodiment of the present invention.
FIG. 6 is a flowchart illustrating an additional operation process according to the configuration of a radius distance in the process of FIG. 5.
FIGS. 7 to FIG. 9 are diagrams illustrating a user interface screen in which network connection information that can access content is input.
FIGS. 10 and 11 are configuration screens required to generate meta spacetime access gate information.
FIGS. 12 and 13 are diagrams illustrating a user interface screen in which an address of a location to be shared is input on an electronic map.
FIG. 14 is a user interface screen in which latitude information and longitude information of a location corresponding to an input address or postal code are acquired and displayed.
FIG. 15 is a user interface screen in which a radius distance of a location to be shared is configured.
FIG. 16 is a screen that notifies of the successful generation of meta spacetime access gate information.
FIG. 17 is a screen in which meta spacetime access gate information is generated and then shared content of a corresponding access gate is enlarged and confirmed.
FIG. 18 is a screen in which meta spacetime access gate information is generated and then information on a corresponding access gate is displayed on the screen.
FIG. 19 is a detailed block diagram illustrating a meta spacetime access gate connection device according to an embodiment of the present invention.

### [Modes of the Invention]

Hereinafter, specific embodiments of the present invention will be described in detail with reference to the attached drawings.

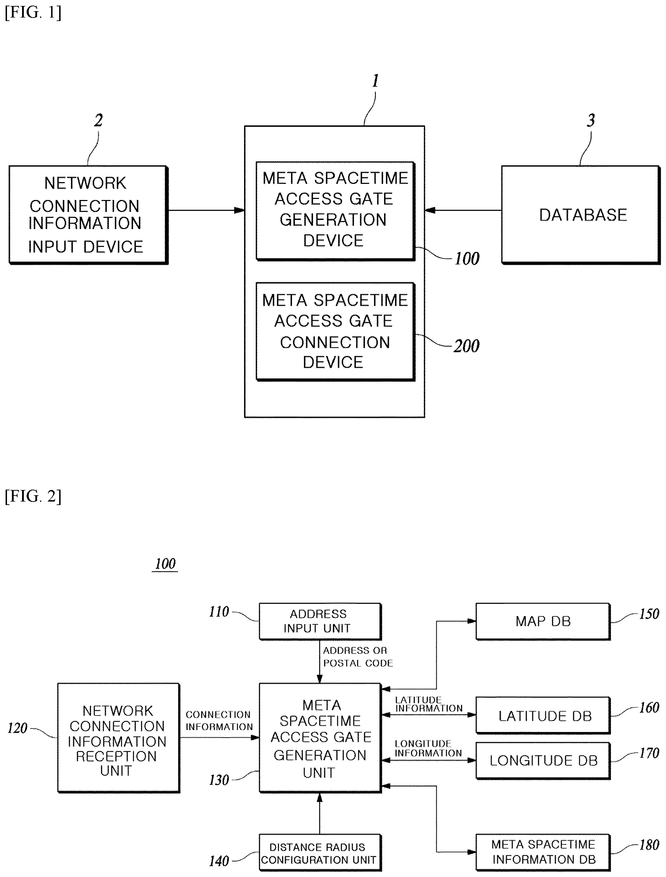

FIG. 1 is a diagram illustrating a system configuration of a meta spacetime access gate generation device and a meta spacetime access gate connection device according to an embodiment of the present invention.

A meta spacetime access gate generation device 100 and a meta spacetime access gate connection device 200 according to one embodiment of the present invention are units in which location information desired to be shared by a user is arbitrarily added to content to be shared and configured, thereby enabling access to or search for the content to be shared at a specific location (spacetime) configured by users on a network.

The meta spacetime access gate generation device 100 and the meta spacetime access gate connection device 200 can be implemented in one service server 1 and operate in conjunction with a network connection information input device 2 and a database 3.

For example, when network access information that can access the content to be shared is input from the network access information input device 2, the meta spacetime access gate generation device 100 may generate new meta spacetime access gate information by inserting location information to be shared by the user into the network access information and store the generated meta spacetime access gate information in the database 3.

When a search for the content to be shared is requested by users on the network through the network connection information input device 2, the meta spacetime access gate connection device 200 may search for the meta spacetime access gate information already stored in the database 3 to detect the meta spacetime access gate information through which the corresponding content may be accessed, and allow access to the corresponding content. In this case, the users on the network are limited to users who match the location information inserted in the user's request when the meta spacetime access gate generation device 100 generates the new meta spacetime access gate information.

With this configuration, the users on the network may upload specific spacetime information desired by a user regardless of the actual location of a terminal when uploading various types of content, such as videos, photos, etc., about products, current events (thinking, experiencing, experimenting, etc.), thoughts or ideas about the past and the future, etc., and it is possible to share thoughts, etc., that other users have about the same space and time even without collecting location information corresponding to the user's personal information.

Hereinafter, the configuration of the meta spacetime access gate generation device 100 and the meta spacetime access gate connection device 200 for implementing this will be specifically described.

### Meta spacetime access gate generation device 100

FIG. 2 is a detailed block diagram illustrating a meta spacetime access gate generation device according to an embodiment of the present invention.

First, referring to FIG. 2, the meta spacetime access gate generation device 100 according to the embodiment of the present invention includes an address input unit 110, a network connection information reception unit 120, a meta spacetime access gate generation unit 130, a distance radius configuration unit 140, a map DB 150, a latitude DB 160, a longitude DB 170, and a meta spacetime information DB 180.

The address input unit 110 receives an address or postal code of a location where content is to be shared. In this case, the address input unit 110 may provide an interface screen in which the address or postal code is to be input and acquire the address or postal code by directly inputting the corresponding address name or postal code (e.g., 396 Gangnam-daero or 06232) on the interface screen. Alternatively, the exact address or postal code may be acquired through an address search, or an electronic map may be provided on the interface screen and a desired location may be selected on the electronic map or acquired through a location search.

The network connection information reception unit 120 receives network connection information for content that is already posted on the Internet or is to be uploaded on the Internet (hereinafter referred to as "content to be shared"), through which the content to be shared can be accessed. In this case, the network connection information reception unit 120 is connected to the network connection information input device (2 of FIG. 1) illustrated in FIG. 1 and receives the network connection information for the content to be shared from the network connection information input device 2.

The network connection information includes a webpage address or server address where the content to be shared is posted or uploaded. For example, the network connection information may be composed of an accessible URL address, an IP address, or a source code including any of these.

The map DB 150 stores data for providing the electronic map.

The latitude DB 160 and the longitude DB 170 store latitude and longitude information of a location corresponding to the map or postal code. In FIG. 2, the latitude DB 160 and the longitude DB 170 are illustrated as separate components, but they can be integrated and implemented as a single DB if necessary.

The meta spacetime information DB 180 stores new meta spacetime access gate information generated by the meta spacetime access gate generation unit 130 by matching the new meta spacetime access gate information for each piece of content.

Here, the map DB 150, the latitude DB 160, the longitude DB 170, and the meta spacetime information DB 180 may be included and configured in the meta spacetime access gate generation device 100, but are not limited thereto, and may be configured in the service server (1 of FIG. 1) where the meta spacetime access gate generation device 100 is implemented or in an external database (3 of FIG. 1). The external database (3 of FIG. 1) may be a cloud-based storage space.

The meta spacetime access gate generation unit 130 may search for and acquire latitude and longitude information of the location corresponding to the address or postal code input from the address input unit 110 in the latitude DB 160 and the longitude DB 170, and generate new meta spacetime access gate information for the content to be shared by including the acquired latitude and longitude information together with the network access information received from the network connection information reception unit 120.

In addition, the meta spacetime access gate generation unit 130 stores the newly generated meta spacetime access gate information in the meta spacetime information DB 180. In this case, the newly generated meta spacetime access gate information may be matched with identification information with which the content to be shared or the user may be identified and stored.

The newly generated meta spacetime access gate information is a source code that includes accessible link information or connection information, which includes latitude and longitude information of the location to be shared, i.e., a location corresponding to the address or postal code, as a meta space and time.

When generating the new meta spacetime access gate information, the meta spacetime access gate generation unit 130 may further include address information of the location that matches the latitude and longitude information.

In addition, when generating the meta spacetime access gate information, the meta spacetime access gate generation unit 130 may further include a postal code of the location that matches the latitude and longitude information.

Alternatively, the meta spacetime access gate generation unit 130 may generate the meta spacetime access gate information by including both the address information and postal code of the location matching the latitude and longitude information.

In this way, since the meta spacetime access gate generation unit 130 generates the new meta spacetime access gate information based on the location to be shared, when there are a plurality of locations to be shared, a plurality of pieces of meta spacetime access gate information may be generated and managed for each piece of content.

Meanwhile, the meta spacetime access gate generation unit 130 may generate the meta spacetime access gate information by further including location information within a space specified by a distance from a desired location to an arbitrary radius or location information in a space area specified by a height configured from a desired location as the location information to be shared.

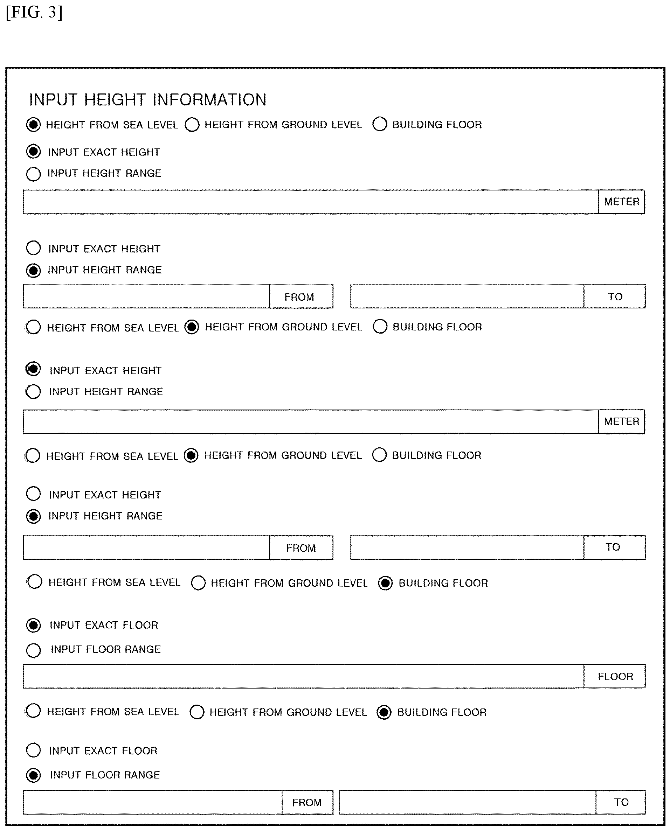

Here, the space specified by the height may include one of the number of floors of an arbitrary building, a height from sea level, and a height from the ground, as illustrated in FIG. 3. Specifically, the space specified by the height may be specified by specifying a single floor number or height or by designating a range of floors (from a certain floor to another floor) or a range of heights (from a certain height to another height).

For example, when a user wants to share a memory of meta space and time with others, there may be cases where the memory is not clear. When an exact location (when only the building or address is known) and time of the corresponding meta space and time are known, but the floor of the building is not exactly remembered, it can be specified as a range from an arbitrary floor to an arbitrary floor.

Meanwhile, the meta spacetime access gate generation unit 130 may generate the meta spacetime access gate information by further including time information related to the time point or period of disclosure at the location to be shared.

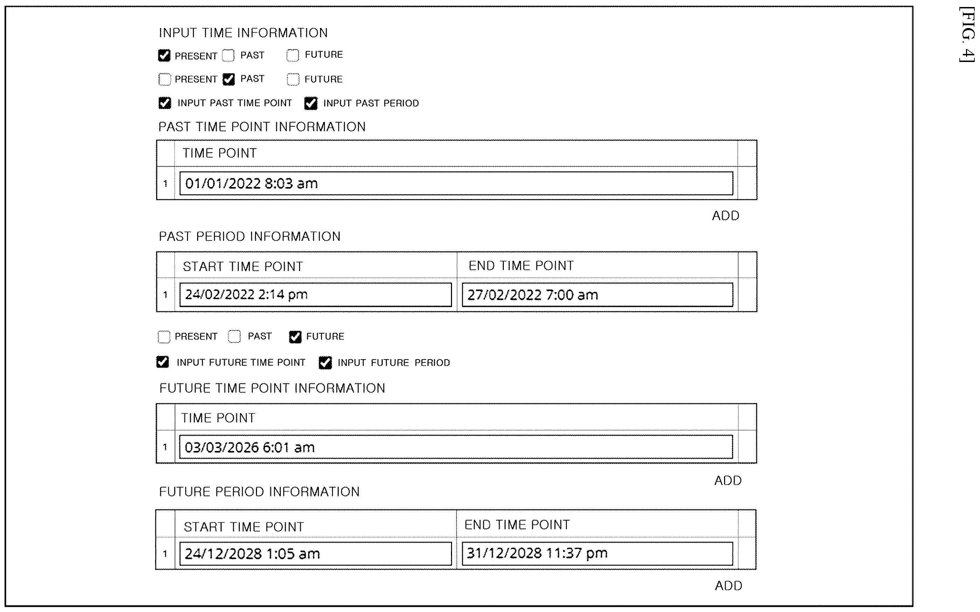

The time information includes information on how long to share at present, past, and future points in time, as shown in Figure 4.

The time information, as illustrated in FIG. 4, includes information on a duration of sharing the corresponding content at a specific time point, whether in the present, past, or future.

For example, the user may upload a video in a square in Manhattan in New York, United States, and configure the disclosure location of the video to a 1 km radius from the center of the same square in Manhattan for a one-year period starting 10 years from now. Alternatively, the user may configure the disclosure location to a spatial location within a 200 meter radius from the center of the capitals of Korea and France for a 30-minute period starting 48 hours from now.

Here, when multiple pieces of time information are included for one piece of content to be shared, the meta spacetime access gate generation unit 130 may generate multiple different pieces of meta spacetime access gate information corresponding to multiple pieces of time information. Therefore, the content to be shared may be disclosed at different time points or different periods included in the time information.

Meanwhile, when there are multiple locations to be shared, in other words, when one or more addresses or postal codes are input and multiple pieces of latitude and longitude information are included accordingly, the meta spacetime access gate generation unit 130 may insert the multiple pieces of latitude information and longitude information by assigning a set ID obtained by grouping the multiple pieces of latitude information and longitude information instead of directly assigning the multiple pieces of latitude information and longitude information to the meta spacetime access gate information. For example, when generating the meta spacetime access gate information including a URL address, the meta spacetime access gate information may be generated to include [URL address] + [multiple pieces of latitude and longitude information], or may be configured to include only [URL address] + [set ID obtained by grouping the multiple pieces of latitude and longitude information]. Alternatively, the meta spacetime access gate information may be generated to include [URL address] + [one piece of representative latitude and longitude information among the multiple pieces of latitude and longitude information] + [set ID obtained by grouping the remaining pieces of latitude and longitude information]. The same applies when using the IP address or source code instead of the URL address.

In addition, when disclosing the content to be shared through a service provider's website, the meta spacetime access gate generation unit 130 may generate the meta spacetime access gate information by assigning a service provider's domain address (URL address) or a specific IP address. That is, the meta spacetime access gate information may be generated to include [domain address (or specific IP address) of the service provider] + [network access information (URL address, IP address, source code)] + [multiple pieces of latitude and longitude information]. Therefore, when the user accesses the content to be shared, the content to be shared may be accessed through the service provider's website.

Meanwhile, a configuration of assigning the set ID according to the present invention can be applied more efficiently even when an arbitrary radius distance is configured for the location to be shared. When the arbitrary radius distance is configured, multiple pieces of location information can be included in the space defined by a distance to the configured radius, and it is more efficient to assign a set ID obtained by grouping the location information and apply the assigned set ID.

In practice, a text length constituting the meta spacetime access gate information and the link length become longer when the number of pieces of latitude and longitude information included in the meta spacetime access gate information is greater. Accordingly, whenever users access the meta spacetime access gate information, accumulated traffic increases, and as the number of users increases, the amount of the accumulated traffic increases exponentially. This causes a loss of network resources and inevitably reduces the speed. However, when the above-mentioned set ID assignment method is applied, the present invention can be implemented in a way that contributes to smoother network traffic.

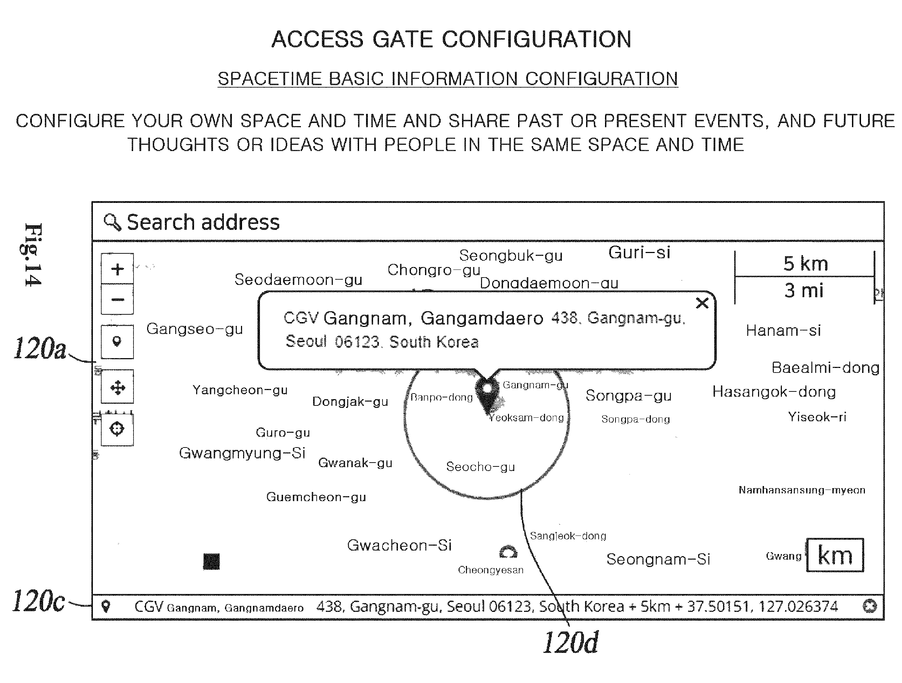

The distance radius configuration unit 140 provides a user interface (UI) manipulation screen for configuring the radius for the location to be shared. For example, as illustrated in FIG. 14, for the convenience of the user, a control bar 112a for adjusting the radius distance laterally or horizontally, or + and - buttons, etc., may be provided.

In addition, the distance radius configuration unit 140 may simultaneously provide the UI manipulation screen for configuring the radius distance on the interface screen in which the address or postal code is input in conjunction with the address input unit 110 and receive radius distance information together with the address information of the location to be shared. Here, the radius distance information is information for configuring a space area defined by the distance from the location to be shared to the radius.

When the radius distance is configured through the distance radius configuration unit 140, the meta spacetime access gate generation unit 130 may generate the meta spacetime access gate information to further include the configured radius distance information to the meta spacetime access gate information.

In this case, the meta spacetime access gate generation unit 130 may assign the above-described set ID to reduce the network traffic. That is, the latitude and longitude information included within the configured radius distance and the latitude and longitude information not included within the radius distance may be distinguished and grouped, and the grouped latitude and longitude information may be included in the meta spacetime access gate information in the form of the set ID.

In another embodiment, the meta spacetime access gate generation unit 130 may generate the meta spacetime access gate information by directly assigning latitude information and longitude information of a location that is the center of the radius as representative information to the meta spacetime access gate information, and assigning other latitude information and longitude information included within the radius as a set ID.

The operation process of generating the meta spacetime access gate information by the above device configuration is as follows.

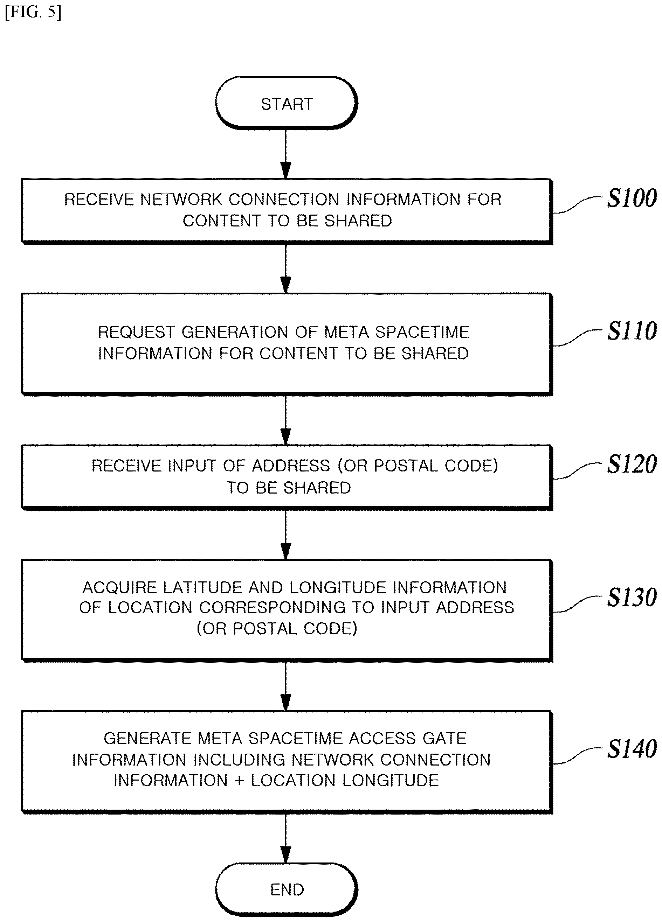

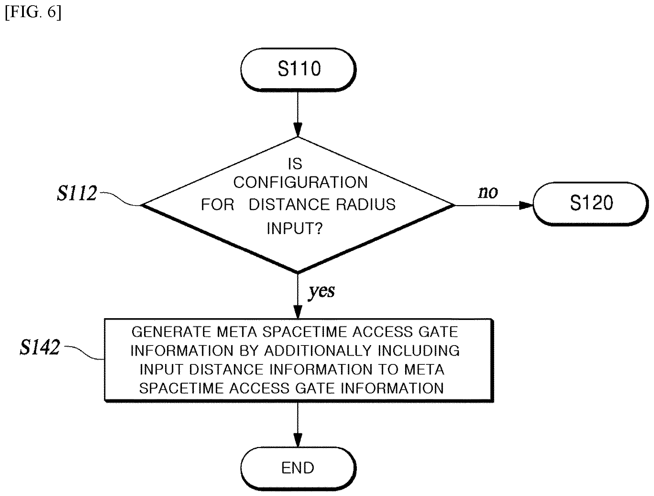

In this regard, FIG. 5 is a flowchart illustrating the operation process of the meta spacetime access gate generation device according to one embodiment of the present invention, FIG. 6 is a flowchart illustrating an additional operation process according to the radius distance configuration during the process of FIG. 5, and FIGS. 7 to 18 are diagrams illustrating a user interface screen executed with each operation of FIG. 5 as an example.

First, referring to FIG. 5, in a first operation S100, the meta spacetime access gate generation device 100 receives network access information through which content to be shared can be accessed from a user through the network connection information reception unit 130 of FIG. 2.

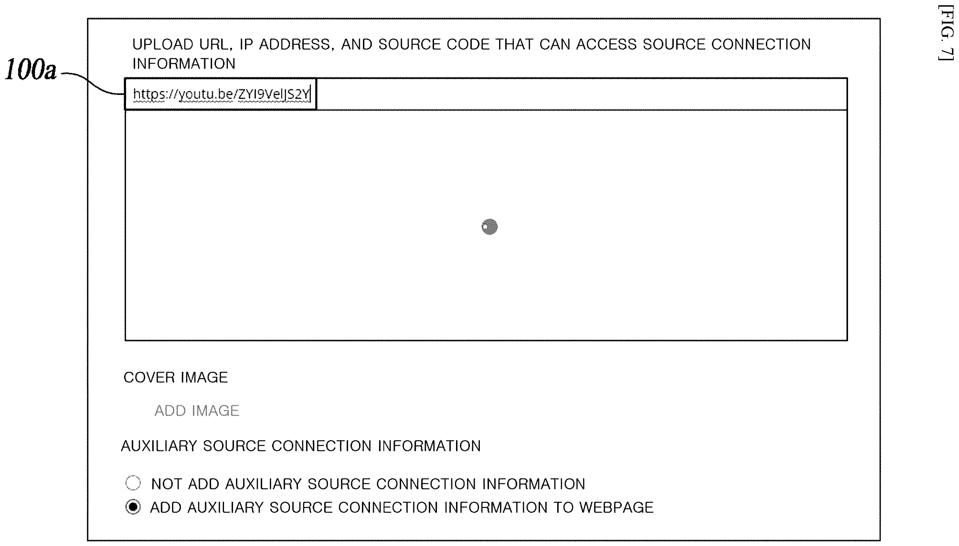

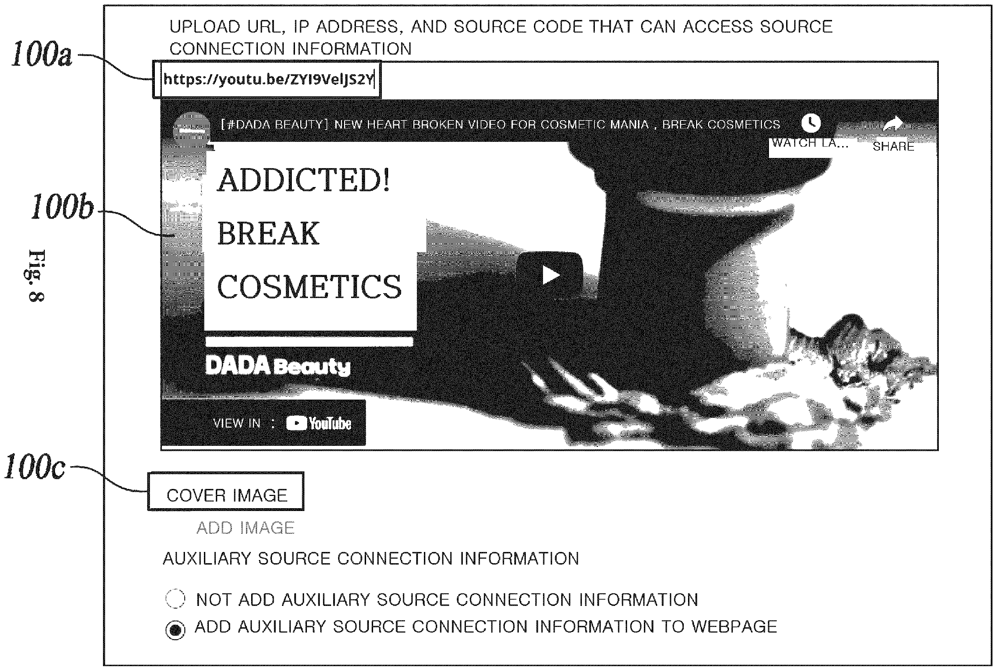

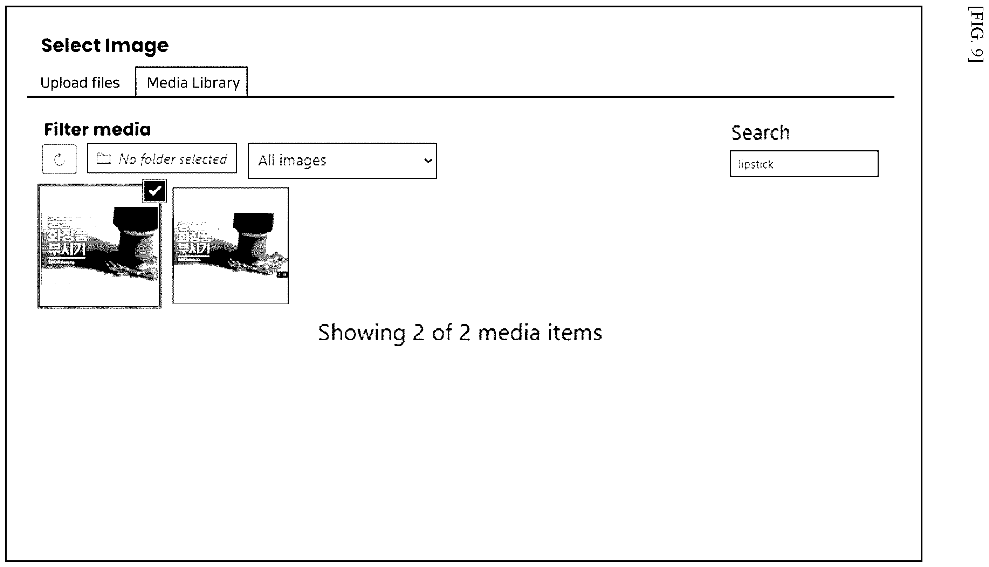

As an example, FIG. 7 shows a screen where a URL address 100a is input as network connection information in an input window. FIG. 8 shows a screen where content to be shared 100b corresponding to the input URL address 100a and a cover image 100c for the content to be shared 100b are displayed. FIG. 9 shows a screen where the cover image 100c is configured. Here, a video posted on YouTube is shown as an example of the content to be shared. When the configuration menu of the cover image 100c is selected as in FIG. 8, related image files are displayed as in FIG. 9, and when a desired image file is selected from the displayed image file, the selected image file is configured as the cover image.

Next, in operation S110, the meta spacetime access gate generation device 100 receives basic configuration information required to generate meta spacetime access gate information.

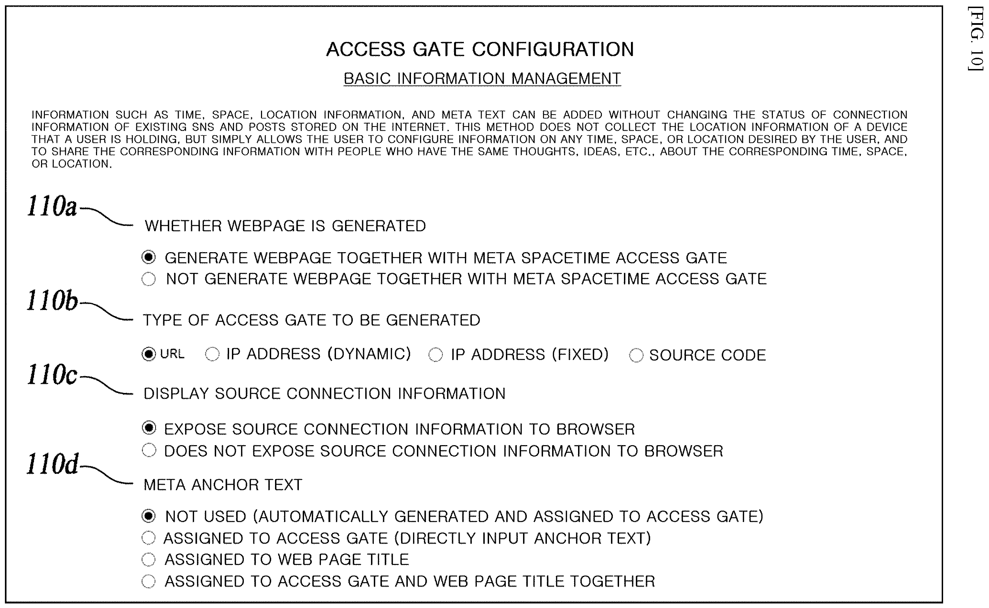

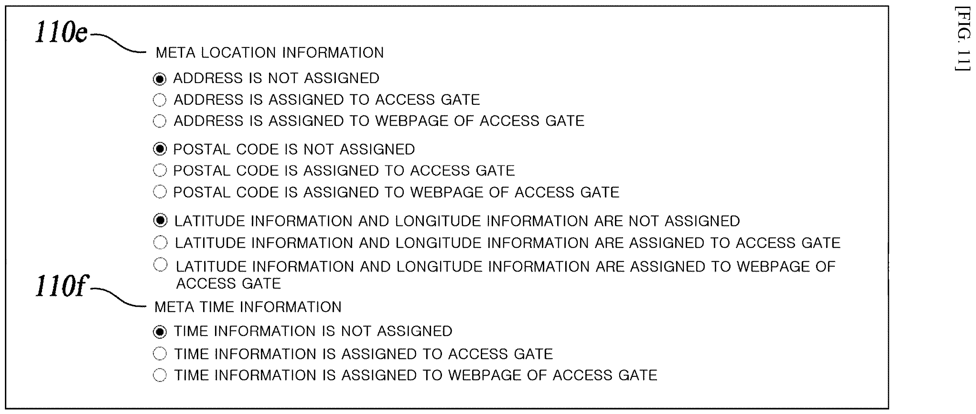

For example, as shown in FIGS. 10 and 11, basic information of various items may be configured and managed in a configuration screen required to generate the meta spacetime access gate information. The basic information includes information 110a indicating whether a webpage for configuring whether to generate the meta spacetime access gate information is generated on the webpage, a type 110b of network connection information to be generated, information 110c concerning whether to display connection information concerning whether to disclose network connection information, information 110d concerning whether to use meta anchor text, information 110e concerning whether to assign an address, postal code, or latitude/longitude corresponding to meta location information, and information 110f concerning whether to provide time information.

Next, in operation S120, the meta spacetime access gate generation device 100 receives an address or postal code of a location where corresponding content is to be shared through the address input unit 110 of FIG. 2.

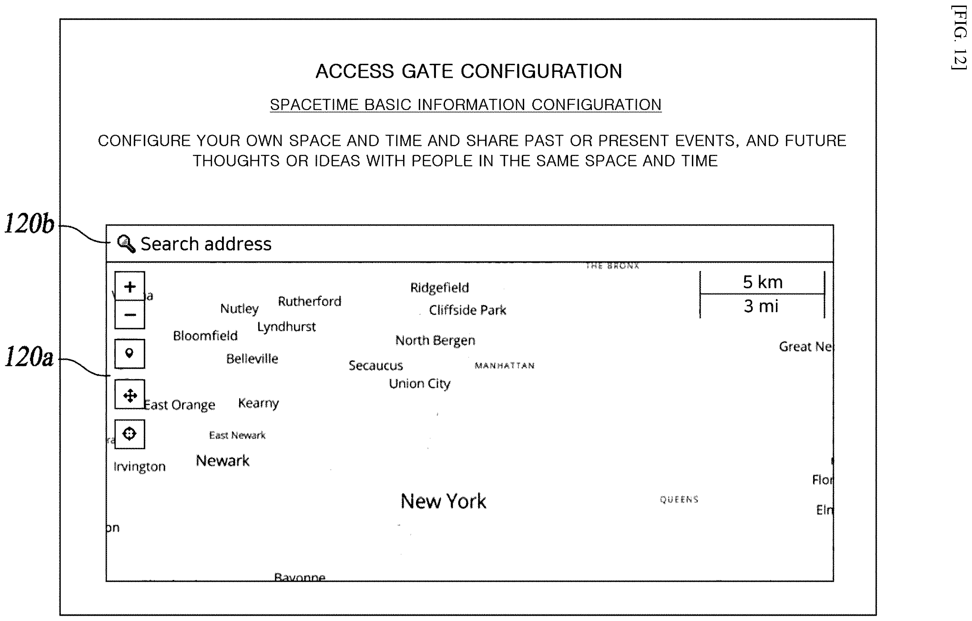

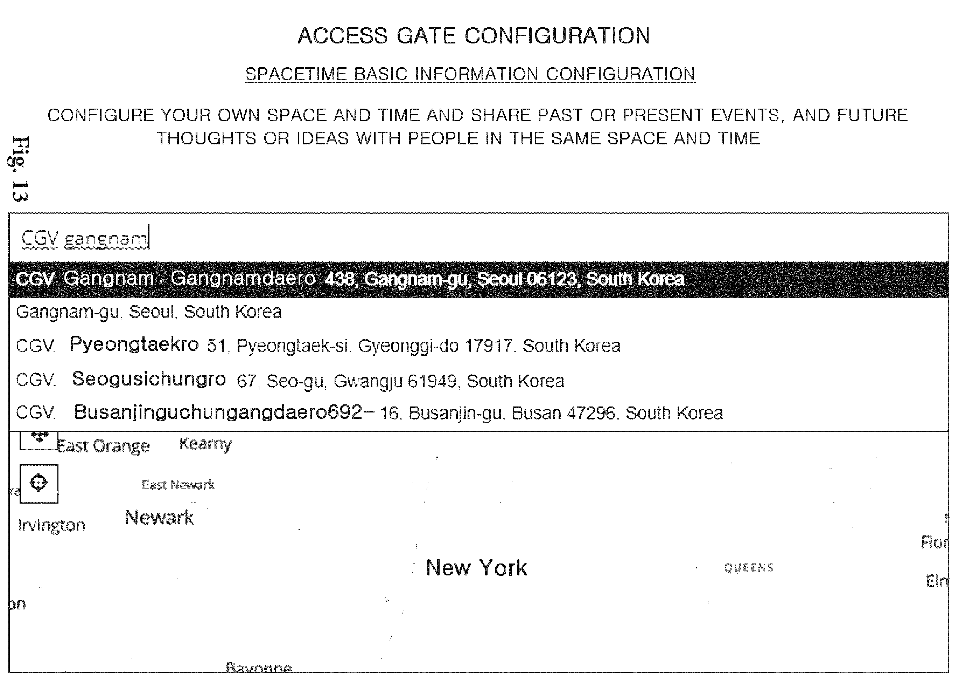

This regard is illustrated in detail in FIGS. 12 and 13. FIGS. 12 and 13 show a screen for obtaining an address or postal code through a map search in conjunction with an electronic map.

As shown in FIG. 12, an electronic map 120a and an address search window 120b are basically displayed on an interface screen, and when the address or postal code of a location to be shared by the user is input in the address search window 120b, the area surrounding the input location is displayed in conjunction with the electronic map 120a. FIG. 13 shows an example of inputting the address of a CGV movie theater located in Gangnam-gu.

Next, in operation S130, the meta spacetime access gate generation unit 130 of the meta spacetime access gate generation device 100 detects latitude and longitude information of a location corresponding to the input address or postal code by searching for data stored in the latitude DB 160 and the longitude DB 170.

For example, FIG. 14 shows a screen in which the latitude and longitude information of the location corresponding to the address of the CGV movie theater received in FIG. 13 is acquired and displayed on the electronic map. The area surrounding the CGV movie theater is displayed on the electronic map 120a, and a radius distance 120d configured in the previous operation S110 is displayed. In addition, information currently configured on the electronic map 120a, that is, information 120c including latitude and longitude information and radius information corresponding to the address of the CGV movie theater (corresponding location), along with network access information of the corresponding content, is displayed in real time. This information 120c is information used for the meta spacetime access gate information, and although the information 120c is shown in the current map, when the meta spacetime access gate information is generated, the information 120c may or may not include radial distance information, latitude information, and longitude information as well as time information depending on the basic configuration information configured by the user.

Next, in operation S140, the meta spacetime access gate generation unit 130 generates meta spacetime access gate information for the content to be shared, including the detected latitude and longitude information and network connection information. Then, the generated meta spacetime access gate information is stored in the meta spacetime information DB 180.

In this case, the meta spacetime access gate information may be stored by matching the meta spacetime access gate information with information (ID or name, title) with which the user or the content to be shared can be identified.

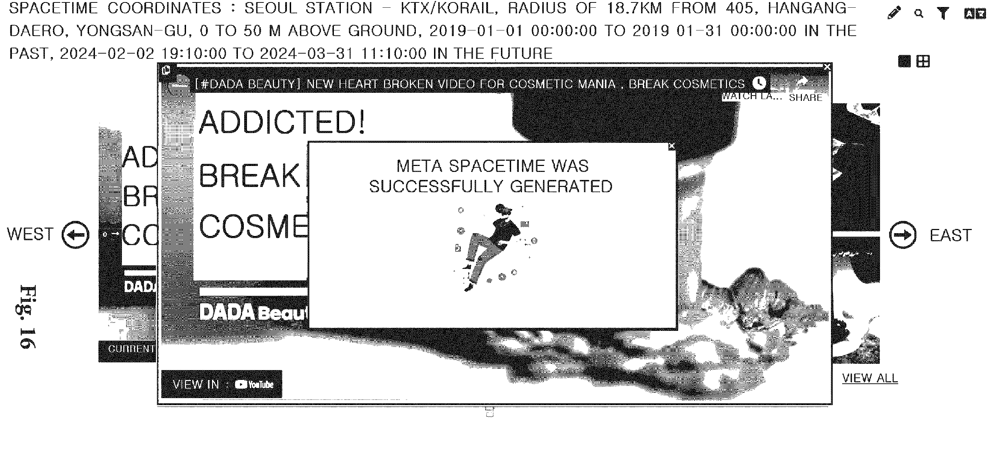

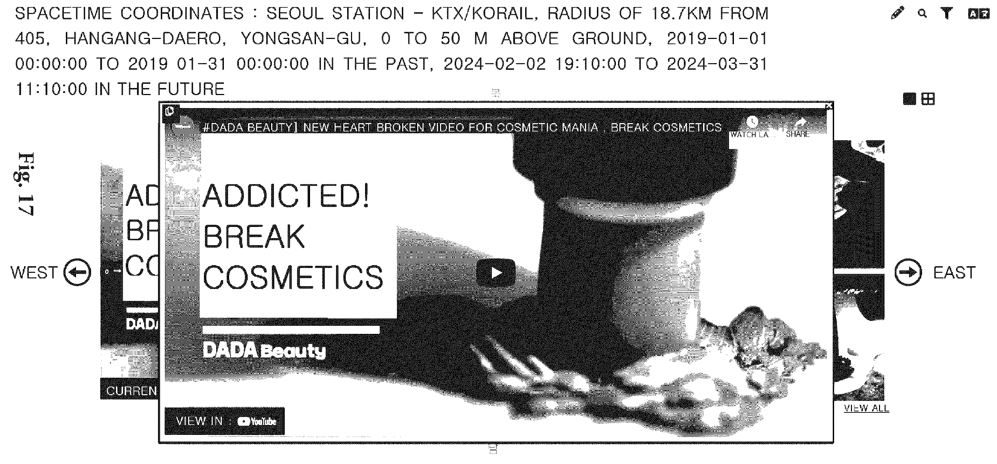

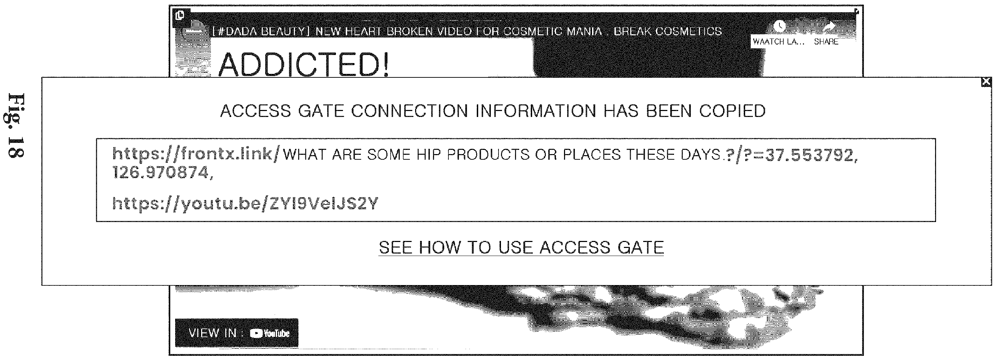

FIG. 16 shows a screen that informs that the meta spacetime access gate information has been successfully generated, FIG. 17 shows a screen that generates the meta spacetime access gate information and then enlarges and confirms the content to be shared of a corresponding access gate, and FIG. 18 shows a screen that generates the meta spacetime access gate information and then displays information on the corresponding access gate on the screen.

The meta spacetime access gate generation unit 130 of the meta spacetime access gate generation device 100 provides a function of displaying the generated meta spacetime access gate information on the screen, enabling direct access to corresponding link information, and copying the meta spacetime access gate information as needed.

According to this process, even when the user's personal information or location information cannot be added or modified after posting the content to be shared on a specific website or app such as YouTube, there is an advantage in that the user can access or search for the corresponding content only at the user's desired location by generating and disclosing new meta spacetime access gate information in which general users, not administrators, freely modify and add meta information.

Next, in operation S122 of FIG. 6, the meta spacetime access gate generation device 100 may determine whether there is an input for the radius distance through the distance radius configuration unit 140.

This operation may be performed during operation S110 of configuring the basic information in FIG. 5 or may be performed by the user's operation after detecting the latitude and longitude information of the desired location and adjusting the radius distance before generating the final meta spacetime access gate information.

When the configuration of the radius distance is not input in operation S112, the next operation S120 of FIG. 5 is performed.

When the configuration of the radius distance is input in the above operation S112, as in the following operation S142, the meta spacetime access gate generation unit 130 of the meta spacetime access gate generation device 100 may additionally include or not include the input radius distance information by reflecting the input radius distance information in the meta spacetime access gate information based on the basic configuration information, and generate the final meta spacetime access gate information.

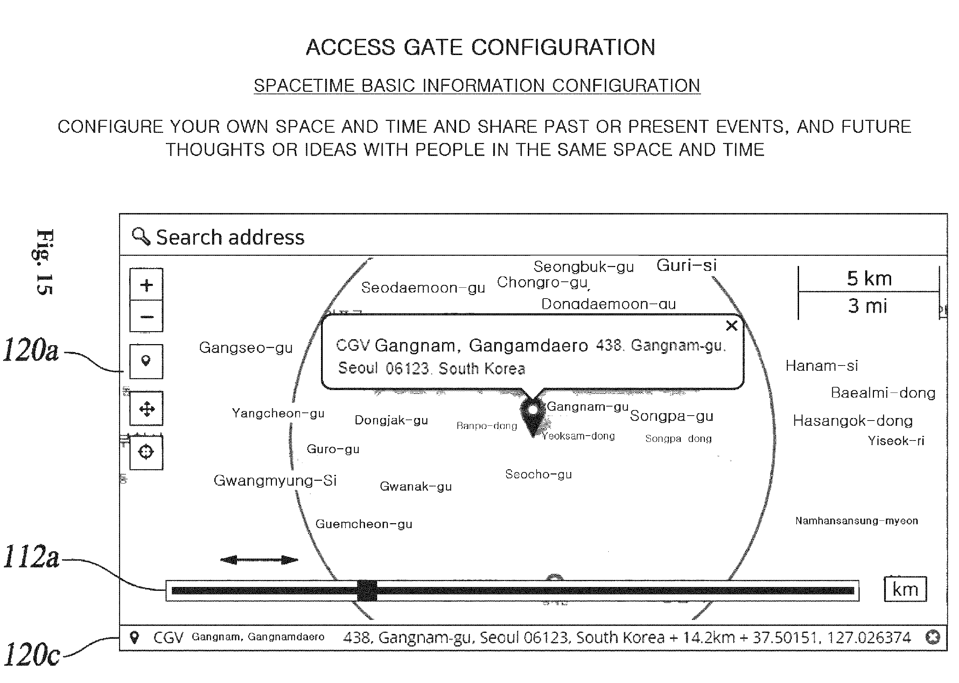

For example, FIG. 15 shows an example in which the control bar 112a for adjusting the radius distance is provided on a screen where the latitude and longitude information corresponding to the CGV movie theater of FIG. 14 are displayed, so that the radius distance is configured to be enlarged from the previous 5 km to 14.2 km. This is a case where the radius distance is configured and input by the user's operation in the operation before generating the final meta spacetime access gate information. In a field of the information 120c located at the bottom of the screen, whenever the radius distance is configured or changed in synchronization with the input of the control bar 112a, the radius distance information is modified and displayed.

In this case, when there are multiple pieces of latitude and longitude information corresponding to a spatial area specified by the corresponding radius distance, as described above, the meta spacetime access gate generation device 100 assigns only a set ID obtained by grouping the multiple pieces of latitude and longitude information to the meta spacetime access gate information, and the multiple pieces of latitude and longitude information corresponding to the assigned set ID are stored and managed by a matching logic between the database and the meta spacetime access gate generation unit 130.

In this case, the meta spacetime access gate generation device 100 may design a logic that can access the corresponding latitude and longitude information through the set ID by a program code or protocol determined by a person skilled in the art in the database storing the latitude and longitude information.

In addition, in operation S142, the meta spacetime access gate generation device 100 may generate one piece of meta spacetime access gate information including multiple pieces of latitude and longitude information or may generate the one piece of meta spacetime access gate information including only one piece of latitude and longitude information.

In the latter case, it can be understood as a concept of generating multiple pieces of auxiliary meta spacetime access gate information. For example, the same content can be generated as main meta spacetime access gate information and multiple pieces of auxiliary meta spacetime access gate information for each location to be shared. That is, while Gangnam in Seoul is basic information, Manhattan in the U.S. and Paris in France can be generated as auxiliary meta spacetime access gate information.

In addition, even when the location to be shared for the same content is the same, the meta spacetime access gate generation device 100 may generate multiple pieces of auxiliary meta spacetime access gate information based on location information according to the radius distance, location information that can be specified by a height from the location to be shared, or location information according to a time point or period of disclosure. That is, the meta spacetime access gate information may be generated to include the location information that allows the content to be shared to be disclosed at any location from the center of Gangnam, Seoul, from now and disclosed at any location within Manhattan, the United States, and Paris, France, for a 30-minute period starting 48 hours from now.

### Meta spacetime access gate connection device 200

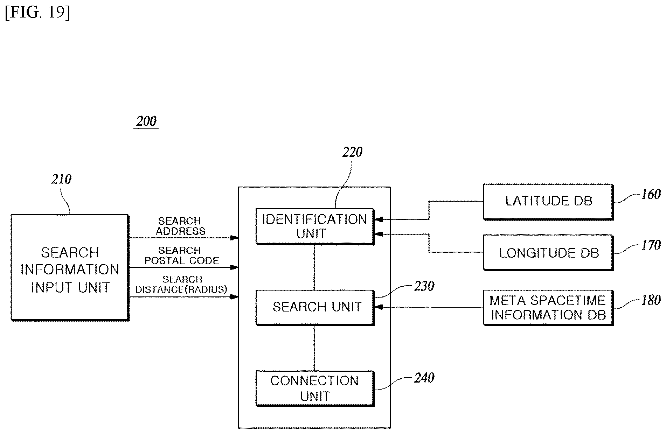

FIG. 19 is a detailed block diagram illustrating a meta spacetime access gate connection device according to an embodiment of the present invention.

The meta spacetime access gate connection device 200 according to the embodiment of the present invention includes a search information input unit 210, an identification unit 220, a search unit 230, and a connection unit 240.

The search information input unit 210 receives search information for content to be shared from a large number of unspecified user terminals.

Here, the large number of unspecified user terminals may be a user-side network connection information input device (2 in FIG. 1) and may include all of the large number of unspecified terminals, such as PCs, smartphones, pads, etc., without being limited thereto.

The search information is location information that the user wants to search for, and includes words or word combinations including at least one of an address, a postal code, a radius distance, height information, or time information.

The identification unit 220 identifies latitude and longitude information of the location corresponding to the search information input through the search information input unit 210 by searching for data stored in the latitude DB 160 and the longitude DB 170.

The search unit 230 searches for the meta spacetime access gate information matching the latitude and longitude information identified through the identification unit 220 by referencing the meta spacetime information DB 180.

The connection unit 240 may access network connection information included in the meta spacetime access gate information retrieved by the search unit 230, through the Internet network.

Therefore, as a basic search method, when the location information including the address or postal code is input, the meta spacetime access gate connection device 200 according to one embodiment of the present invention identifies the latitude information and longitude information corresponding to the input address or postal code, and searches for and provides meta spacetime access gate information matching the identified latitude information and longitude information.

In another search method, when a search for location information including the radius distance is requested together with the location information to be searched for, the identification unit 220 of the meta spacetime access gate connection device 200 identifies the latitude and longitude information of the location for which the search is requested, as well as the latitude and longitude information including the radius distance. The search unit 230 searches for and provides the meta spacetime access gate information including multiple pieces of latitude information and longitude information identified from the data previously stored in the meta spacetime information DB 180.

In still another search method, when a search for location information including at least one of time information and height information is requested together with the location information to be searched for, the identification unit 220 identifies the latitude and longitude information of the location for which the search is requested, and also identifies the latitude and longitude information including the time information or height information. Then, the search unit 230 searches for and provides meta spacetime access gate information including at least one of latitude information, longitude information, time information, or height information identified from the data previously stored in the meta spacetime information DB 180.

The above description is merely an example of the present invention, and various modifications may be made by those skilled in the art without departing from the technical spirit of the present invention. Therefore, embodiments disclosed in the specification of the present invention do not limit the present invention. The scope of the present invention should be interpreted from the following claims, and various equivalents and modified examples that can replace them at the time of filing should be interpreted as being included in the scope of the present invention.

## Claims

1. A device for generating a meta spacetime access gate including a location information value required by a user, the device comprising:
a network connection information reception unit configured to receive, from a user, network connection information which allows access to content to be shared which is posted on the Internet or uploaded to a specific website;
an address input unit configured to receive an address or postal code of a location for sharing the content to be shared; and
a meta spacetime access gate generation unit configured to acquire latitude information and longitude information of a location corresponding to the address or postal code received through the address input unit, and generate meta spacetime access gate information for the content to be shared that includes the acquired latitude information and longitude information along with the network connection information.

2. The device of claim 1, further comprising:
a latitude and longitude DB configured to store the latitude information and longitude information of the location corresponding to the address or postal code; and
a meta spacetime information DB configured to store meta spacetime access gate information for each piece of content generated through the meta spacetime access gate generation unit,
wherein the meta spacetime access gate generation unit acquires the latitude information and longitude information of the location corresponding to the address or postal code received through the address input unit by querying data stored in the latitude and longitude DB, and matches the meta spacetime access gate information with identification information which allows the user or the content to be identified and stores the matched information when storing the meta spacetime access gate information in the meta spacetime information DB.

3. The device of claim 1, wherein the address input unit selects the location to be shared on an electronic map in conjunction with the electronic map or receives the location to be shared through a map search.

4. The device of claim 1, wherein the network connection information is an address of a webpage or server where the content to be shared is posted or uploaded, and the address of the webpage or server is a URL address, an IP address, or a source code including one of the URL address and the IP address.

5. The device of claim 1, wherein the meta spacetime access gate generation unit generates meta spacetime access gate information for the content to be shared that further includes address information of a location matching the latitude information and longitude information.

6. The device of claim 1 or 5, wherein the meta spacetime access gate generation unit generates the meta spacetime access gate information for the content to be shared that further includes a postal code of the location matching the latitude information and longitude information.

7. The device of claim 1, wherein the meta spacetime access gate generation unit generates the meta spacetime access gate information for the content to be shared that further includes location information in a space area specified by a height configured from the location matching the latitude information and longitude information.

8. The device of claim 7, wherein the space specified by the height includes one of the number of floors of an arbitrary building, a height from sea level, and a height from the ground, and is specified by specifying a single floor number or height or by designating a range of floors (from a certain floor to another floor) or a range of heights (from a certain height to another height).

9. The device of claim 1, wherein the meta spacetime access gate generation unit generates meta spacetime access gate information on the content to be shared that further includes time information including a time point or period for disclosing the content to be shared at the location matching the latitude information and longitude information.

10. The device of claim 9, wherein the meta spacetime access gate generation unit generates, when multiple pieces of time information are included in the content to be shared, multiple pieces of different meta spacetime access gate information to correspond to the multiple pieces of time information and disclose the content to be shared at different time points or different periods included in the time information.

11. The device of claim 1, further comprising:
a distance radius configuration unit configured to provide an interface (UI) manipulation screen for configuring a spatial area defined by a distance from the location matching the latitude information and longitude information to a radius,
wherein the meta spacetime access gate generation unit additionally includes radius distance information configured by the distance radius configuration unit when generating the meta spacetime access gate information on the content to be shared.

12. The device of claim 11, wherein the meta spacetime access gate generation unit groups latitude information and longitude information of a spatial location defined by the radius distance configured by the distance radius configuration unit with respect to the location corresponding to the latitude information and longitude information, assigns a set ID to the grouped latitude information and longitude information, and generates the meta spacetime access gate information to include only the set ID.

13. The device of claim 11, wherein the meta spacetime access gate generation unit directly includes latitude and longitude information at a location that is the center of the radius as representative information in the meta spacetime access gate information, and assigns a set ID to the latitude and longitude information at the spatial location defined by the radius distance to generate the meta spacetime access gate information.

14. A meta spacetime access gate connection device comprising a unit configured to:
receive search information including at least one of an address or a postal code as location information to be searched for;
identify latitude information and longitude information of a location corresponding to the received search information, and search for meta spacetime access gate information matching the identified latitude and longitude information; and
provide access to network access information included in the retrieved meta spacetime access gate information through an Internet network.

15. The meta spacetime access gate connection device of claim 14, wherein, when a search for location information including the radius distance is requested together with the location information to be searched for, the unit identifies the latitude and longitude information of the location for which the search is requested, as well as latitude and longitude information including the radius distance, and searches for the meta spacetime access gate information including multiple pieces of latitude information and longitude information identified from previously stored data.

16. The meta spacetime access gate connection device of claim 14, wherein, when a search for location information including at least one of time information and height information is requested together with the location information to be searched for, the unit identifies the latitude and longitude information of the location for which the search is requested, and then searches for meta spacetime access gate information including at least one of latitude information, longitude information, time information, or height information identified from the previously stored data.

17. A meta spacetime access gate generation method performed in a device for generating a meta spacetime access gate including a location information value required by a user, the meta spacetime access gate generation method comprising:
receiving, by the generation device, network connection information which allows access to content to be shared which is posted on the Internet or uploaded to a specific website, from a user;
receiving, by the generation device, an address or postal code of a location for sharing the content to be shared;
detecting, by the generation device, latitude information and longitude information of a location corresponding to the received address or postal code; and
generating, by the generation device, meta spacetime access gate information on the content to be shared, that includes the detected latitude information and longitude information along with the network connection information.

18. The meta spacetime access gate generation method of claim 17, wherein the generating of the meta spacetime access gate information includes generating meta spacetime access gate information for the content to be shared that further includes one or more of location information in a spatial area defined by a distance from a location matching the latitude information and longitude information to a radius, location information in a spatial area specified by a height configured from the location matching the latitude information and longitude information, or time information including a time point or period for disclosing the content to be shared at the location matching the latitude information and longitude information.

19. The meta spacetime access gate generation method of claim 17 or 18, wherein, in the generating of the meta spacetime access gate information, at least one of an address and postal code of the location corresponding to the latitude information and longitude information is further included when the meta spacetime access gate information for the content is generated.
